# EUROPÄISCHE PATENTSCHRIFT

(11) **EP 0 956 453 B1**
(45) Veröffentlichungstag und Bekanntmachung des Hinweises auf die Patenterteilung: **08.05.2002**
(21) Anmeldenummer: 97949909.2
(22) Anmeldetag: 07.11.1997
(51) Int. Cl.: F04D 13/08, H02K 5/22

(54) **SCHUTZVORRICHTUNG FÜR DAS STROMKABEL EINER TAUCHPUMPE**
PROTECTIVE DEVICE FOR THE POWER CABLE OF A SUBMERGED PUMP
DISPOSITIF DE PROTECTION POUR LE CABLE D'ALIMENTATION EN COURANT D'UNE POMPE PLONGEANTE

(30) Priorität: 21.12.1996 DE 29622261 U
(43) Veröffentlichungstag der Anmeldung: 17.11.1999
(73) Patentinhaber: Emu Unterwasserpumpen Gmbh, 95030 Hof (DE)
(72) Erfinder: SUTHMANN, Michael, D-85391 Allershausen (DE)
(74) Vertreter: LOUIS, PÖHLAU, LOHRENTZ & SEGETH
(86) Internationale Anmeldenummer: DE9702637
(87) Internationale Veröffentlichungsnummer: WO9828544

(56) Entgegenhaltungen:
- US-A- 2 627 816
- US-A- 2 969 740

## Beschreibung

Die Erfindung betrifft eine Schutzvorrichtung für das Stromkabel einer Tauchpumpe, in der das Stromkabel in den Pumpenkopf mündet, wobei ein das Stromkabel umschließender Schutzschlauch vorgesehen ist, der am Pumpenkopf befestigt ist.

Eine derartige Schutzvorrichtung geht aus US-A-2 627 816 und US-A-2 969 740 hervor. Der Schutzschlauch dieser bekannten Schutzvorrichtungen dient jedoch nur dazu, einen flüssigkeitsdichten Abschluß mit dem Pumpenkopf herzustellen, um ein Eindringen von Flüssigkeit in den Motorraum der Tauchpumpe zu verhindern.

Im allgemeinen werden Tauchpumpen am Stromkabel in die Baugruben abgesenkt. Da dieses Kabel für eine derartige Belastung weder geeignet noch ausgelegt ist, kommt es häufig zu Störfällen.

Außerdem kann sich das Kabel beim Absenken in die Baugrube verhaken, verklemmen oder sonst wie beschädigt werden.

Der Erfindung liegt daher die Aufgabe zugrunde, eine Lösung vorzuschlagen, die das sichere Absenken der Tauchpumpe ermöglicht und dem Stromkabel Schutz gewährt.

Diese Aufgabe wird erfindungsgemäß bei einer Schutzvorrichtung der eingangs genannten Art dadurch gelöst, daß der Schutzschlauch als Absenkhilfe am Pumpenkopf zur Vermeidung von Belastungen des Stromkabels beim Absenken der Tauchpumpe befestigt ist.

Erfindungsgemäß wird die Tauchpumpe nicht mehr über das Stromkabel sondern über den Schutzschlauch in die Baugrube abgesenkt, so daß das Stromkabel frei von einer derartigen Belastung ist und außerdem vor Beschädigungen geschützt ist.

Vorteilhafterweise ist das Stromkabel im Schutzschlauch längsbeweglich gelagert. Dadurch können unterschiedliche Dehnungen von Stromkabel und Schutzschlauch aufgefangen werden.

Vorzugsweise ist der Schutzschlauch so flexibel, daß durch den Schutzschlauch das Aufrollen des Kabels nicht erschwert wird.

Zweckmäßigerweise ist mindestens in das dem Pumpenkopf benachbarte Ende des Schutzschlauches eine Klemmhülse eingesetzt, durch die hindurch das Stromkabel beweglich geführt ist.

In einer Ausführungsform der Erfindung ragt die dem Pumpenkopf benachbarte Klemmhülse aus dem Schutzschlauch heraus und ist mit dem herausragenden Ende fest mit dem Pumpenkopf verbunden, wobei eine den Schutzschlauch von außen erfassende Spanneinrichtung zum Festklemmen des Schutzschlauches an der Klemmhülse vorgesehen ist.

Die Spanneinrichtung kann ein herkömmlicher Spannring sein.

In einer anderen Ausführungsform ist ein erstes Klemmstück starr mit dem Pumpenkopf verbunden, und ist ein zweites Klemmstück unter Einschluß des Schutzschlauches am ersten Klemmstück im Bereich der Klemmhülse festlegbar.

Sowohl bei der ersten Ausführungsform als auch bei der zweiten Ausführungsform wird eine sichere Verbindung zwischen Schutzschlauch und der Tauchpumpe hergestellt, ohne daß das Stromkabel belastet wird. Es mündest vielmehr in lockerer Weise in den Pumpenkopf.

An dem dem Pumpenkopf fernen Ende des Schutzschlauches kann innerhalb desselben eine weitere Klemmhülse vorgesehen sein, durch die hindurch das Stromkabel beweglich geführt ist, und kann eine den Schutzschlauch von außen erfassende Spanneinrichtung zum Festklemmen des Schutzschlauches an der Klemmhülse vorgesehen sein, wobei die Spanneinrichtung an einem Zugseil befestigbar sein kann.

Vorzugsweise weist die Spanneinrichtung eine Schlaufe zur Befestigung eines Zugseiles auf.

Das Zugseil dient, falls erforderlich, zur Verlängerung des Schutzschlauches, wenn dessen Länge beim Absenken der Tauchpumpe in die Baugrube nicht ausreichen sollte.

Vorteilhafterweise sind am Schutzschlauch Längenmarkierungen vorgesehen, anhand welcher abgelesen werden kann, wie tief die Tauchpumpe im Wasser steht.

Der Schutzschlauch kann eine preiswerte Massenware sein, so daß die erfindungsgemäße Lösung entsprechend preiswert ist. Er schützt das Stromkabel vor Knicken, Schlägen und Verklemmungen, wie sie in Baugruben auftreten können. Aufgrund der Dicke des Schutzschlauches ergibt sich eine besondere Griffigkeit.

Die Erfindung wird nun an zwei Ausführungsbeispielen und anhand der beiliegenden Zeichnung näher erläutert. In der Zeichnung stellen dar:
- Fig. 1: eine perspektivische Ansicht der erfindungsgemäßen Schutzvorrichtung für das Stromkabel einer Tauchpumpe,
- Fig. 2: die in Figur 1 dargestellte erste Ausführungsform der erfindungsgemäßen Schutzvorrichtung, teilweise im Schnitt, und
- Fig. 3: eine im Vergleich zur Figur 2 abgeänderte Ausführungsform, teilweise im Schnitt.

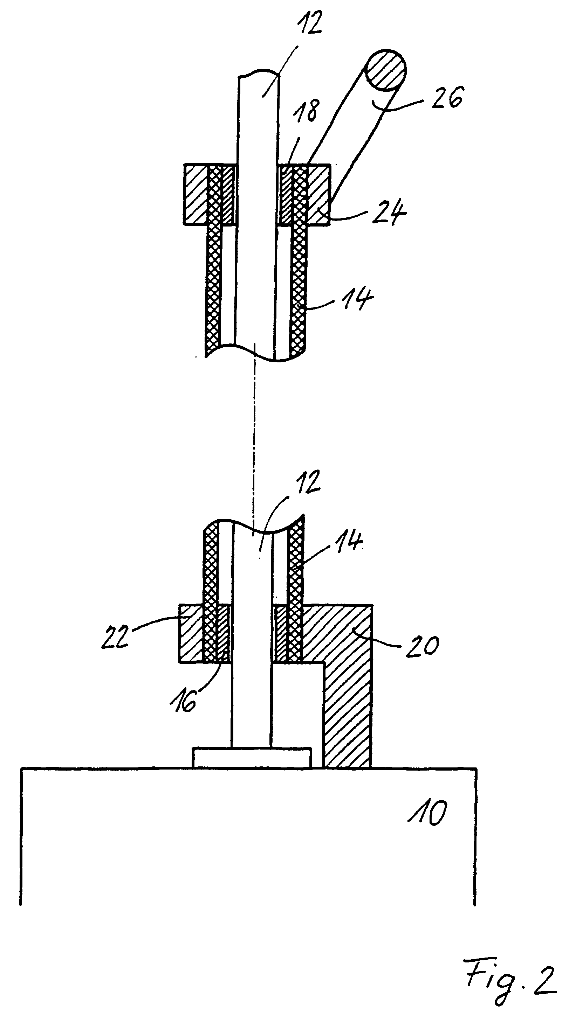

In den Figuren ist ein in den Pumpenkopf 10 einer nicht vollständig dargestellten Tauchpumpe mündendes Stromkabel 12 gezeigt, das, wie gezeigt, von einem Schutzschlauch 14 umschlossen ist. Am unteren Ende des Schutzschlauches 14 ist in der Ausführungsform nach Figur 2 eine Klemmhülse 16 eingesetzt, deren Innendurchmesser größer als der Außendurchmesser des Stromkabels 12 ist, so daß das Stromkabel 12 locker durch die Klemmhülse 16 hindurchgeführt ist. An dem dem Pumpenkopf 10 fernen Ende des Schutzschlauches 14 befindet sich eine Klemmhülse 18, die ebenfalls in das Schlauchende eingesetzt ist und deren Innendurchmesser größer als der Außendurchmesser des Stromkabels 12 ist, so daß auch hier das Stromkabel 12 locker in der Klemmhülse 18 geführt ist.

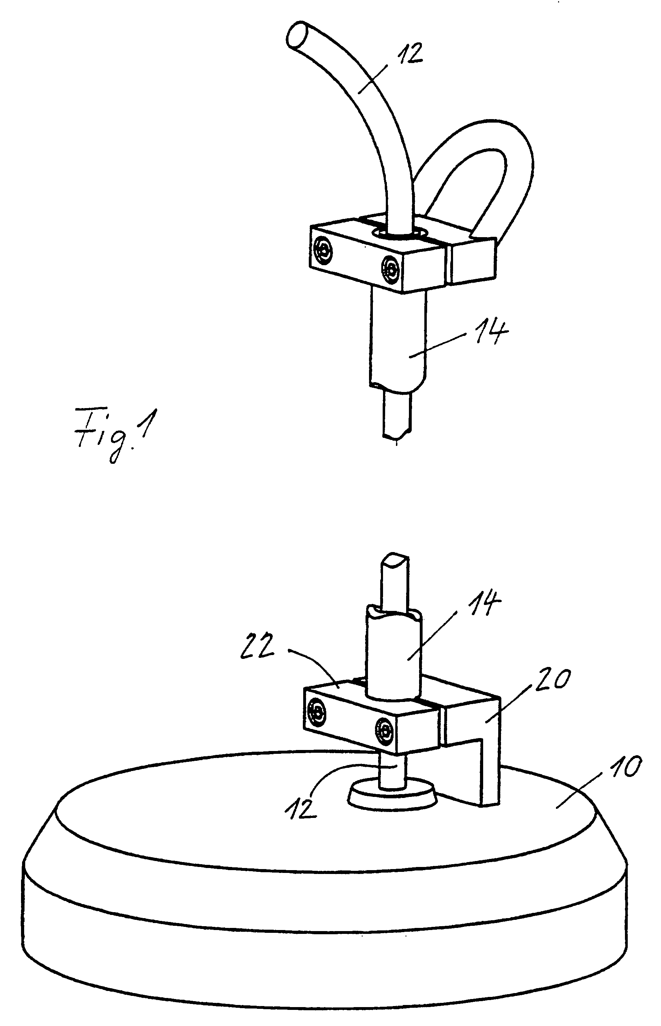

Wie-aus den Figuren 1 und 2 hervorgeht, ist ein erstes Klemmstück 20 starr am Pumpenkopf 10 der Tauchpumpe angebracht und wirkt mit einem zweiten Klemmstück 22 derart zusammen, daß der Schutzschlauch 14 zwischen dem Außenumfang der Klemmhülse 16 und den als Klemmbacken fungierenden Klemmstücken 20 und 22 festgeklemmt wird, so daß die Tauchpumpe bei locker gehaltenem Stromkabel über den Schutzschlauch 14 in eine Baugrube hinabgelassen werden kann. In Figur 1 ist gezeigt, daß das zweite Klemmstück 22 in üblicher Weise mit Hilfe von Schrauben unter Einschluß des Schutzschlauches 14 am ersten Klemmstück 20 festgeklemmt werden kann.

An dem vom Pumpenkopf 10 fernen Ende des Schutzschlauches 14 befindet sich ebenfalls eine Spanneinrichtung 24, deren Wirkungsweise ähnlich der den Klemmstücken 20 und 22 ist, wobei an der Spanneinrichtung 24 eine Schlaufe 26 vorgesehen ist, an der ein Zug- oder Verlängerungsseil befestigt werden kann, das bei nicht ausreichender Länge des Schutzschlauches 14 Verwendung findet.

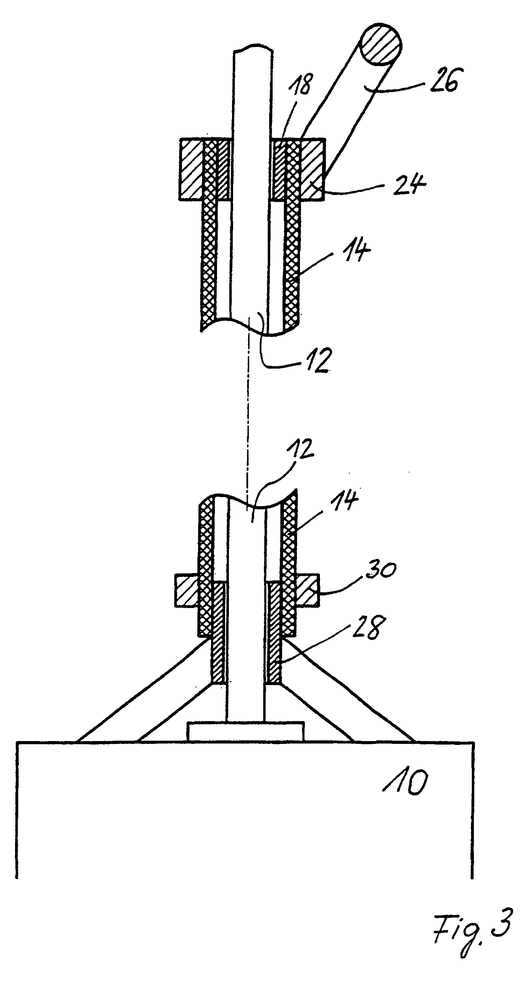

Die Ausführungsform nach Figur 3 unterscheidet sich von der vorangegangenen Ausführung dadurch, daß an Stelle der kurzen Klemmhülse 16 eine längere Klemmhülse 28 an dem im Pumpenkopf benachbarten Ende des Schutzschlauches 14 verwendet wird. Diese Klemmhülse 28 ragt aus dem dem Pumpenkopf 10 benachbarten Ende des Schutzschlauches 14 heraus und ist, wie schematisch gezeigt, fest auf dem Pumpenkopf 10 montiert. Eine Spanneinrichtung in Form eines Spannringes 30 klemmt den Schutzschlauch 14 an der Klemmhülse 28 fest, ähnlich wie das bei der vorangegangenen. Ausführungsform der Fall ist.

Die an den zwei Ausführungsbeispielen oben beschriebene Lösung gewährleistet, daß in dem als Absenkhilfe dienenden Schutzschlauch das Stromkabel schwimmend bzw. beweglich in geschützter Weise gelagert ist.

## Patentansprüche

1. Schutzvorrichtung für das Stromkabel einer Tauchpumpe, in der das Stromkabel in den Pumpenkopf mündet, wobei ein das Stromkabel (12) umschließender Schutzschlauch (14) vorgesehen ist, der am Pumpenkopf (10) befestigt ist,
**dadurch gekennzeichnet,**
**daß** der Schutzschlauch (14) als Absenkhilfe am Pumpenkopf (10) so befestigt ist, daß er Belastungen des Stromkabels beim Absenken der Tauchpumpe verhindert.

2. Schutzvorrichtung nach Anspruch 1,
**dadurch gekennzeichnet,**
**daß** das Stromkabel (12) im Schutzschlauch (14) längsbeweglich gelagert ist.

3. Schutzvorrichtung nach Anspruch 1 oder 2,
**dadurch gekennzeichnet,**
**daß** der Schutzschlauch (14) so flexibel ist, daß er das Aufrollen des Stromkabels (12) nicht erschwert.

4. Schutzvorrichtung nach einem der Ansprüche 1 bis 3,
**dadurch gekennzeichnet,**
**daß** mindestens in das dem Pumpenkopf 10 benachbarte Ende des Schutzschlauches (14) eine Klemmhülse (16; 28) eingesetzt ist, durch die hindurch das Stromkabel beweglich geführt ist.

5. Schutzvorrichtung nach Anspruch 4,
**dadurch gekennzeichnet,**
**daß** die dem Pumpenkopf (10) benachbarte Klemmhülse (28) aus dem Schutzschlauch (14) herausragt und mit dem herausragenden Ende fest mit dem Pumpenkopf (10) verbunden ist, wobei eine den Schutzschlauch (14) von außen erfassende Spanneinrichtung (30) zum Festklemmen des Schutzschlauches an der Klemmhülse (28) vorgesehen ist.

6. Schutzvorrichtung nach Anspruch 5,
**dadurch gekennzeichnet,**
**daß** die Spanneinrichtung ein Spannring ist.

7. Schutzvorrichtung nach Anspruch 4,
**dadurch gekennzeichnet,**
**daß** ein erstes Klemmstück (20) starr mit dem Pumpenkopf (10) verbunden ist und ein zweites Klemmstück (22) unter Einschluß des Schutzschlauches (14) am ersten Klemmstück im Bereich der Klemmhülse (16) festlegbar ist.

8. Schutzvorrichtung nach einem der Ansprüche 1 bis 7,
**dadurch gekennzeichnet,**
**daß** an dem dem Pumpenkopf (10) fernen Ende des Schutzschlauches (14) innerhalb desselben eine Klemmhülse (18) vorgesehen ist, durch die hindurch das Stromkabel (12) beweglich geführt ist, und daß eine den Schutzschlauch (14) von außen erfassende Spanneinrichtung (24) zum Festklemmen des Schutzschlauches an der Klemmhülse (18) vorgesehen ist, wobei an der Spanneinrichtung (24) ein Zugseil befestigbar ist.

9. Schutzvorrichtung nach Anspruch 8,
**dadurch gekennzeichnet,**
**daß** die Spanneinrichtung (24) zur Befestigung des Zugseiles eine Schlaufe (26) aufweist.

10. Schutzvorrichtung nach einem der Ansprüche 1 bis 9,
**dadurch gekennzeichnet,**
**daß** am Schutzschlauch (14) Längenmarkierungen vorgesehen sind.

## Claims

1. Protective device for the power cable of a submersible pump, in which the power cable ends in the pump head, a protective tube (14) surrounding the power cable (12) being provided and being fixed to the pump head (10), **characterized in that** the protective tube (14) is fixed to the pump head (10) as a lowering aid, in such a way that it prevents the power cable being loaded as the submersible pump is lowered.

2. Protective device according to Claim 1, **characterized in that** the power cable (12) is mounted such that it can move longitudinally in the protective tube (14).

3. Protective device according to Claim 1 or 2, **characterized in that** the protective tube (14) is so flexible that it does not make rolling up the power cable (12) more difficult.

4. protective device according to one of Claims 1 to 3, **characterized in that** a clamping sleeve (16; 28), through which the power cable is guided such that it can move, is inserted at least into that end of the protective tube (14) which is adjacent to the pump head (10).

5. protective device according to Claim 4, **characterized in that** the clamping sleeve (28) adjacent to the pump head (10) projects out of the protective tube (14) and is firmly connected to the pump head (10) by the projecting end, a clamping device (30) gripping the protective tube (14) from the outside being provided to clamp the protective tube firmly on the clamping sleeve (28).

6. Protective device according to Claim 5, **characterized in that** the clamping device is a clamping ring.

7. Protective device according to Claim 4, **characterized in that** a first clamping piece (20) is rigidly connected to the pump head (10), and a second clamping piece (22) can be fixed to the first clamping piece in the region of the clamping sleeve (16), including the protective tube (14).

8. Protective device according to one of Claims 1 to 7, **characterized in that** at the end of the protective tube (14) remote from the pump head (10) within the said protective tube (14), a clamping sleeve (18) is provided, through which the power cable (12) is guided such that it can move, and **in that** a clamping device (24) gripping the protective tube (14) from the outside is provided to clamp the protective tube firmly to the clamping sleeve (18), it being possible for a pull cord to be fixed to the clamping device (24).

9. Protective device according to Claim 8, **characterized in that** the clamping device (24) for fixing the pull cord has a loop (26).

10. Protective device according to one of Claims 1 to 9, **characterized in that** length markings are provided on the protective tube (14).

## Revendications

1. Dispositif de protection pour le câble d'alimentation en courant d'une pompe immergée du type dans lequel le câble d'alimentation en courant débouche dans la tête de pompe, un tuyau de protection (14) étant prévu autour du câble d'alimentation en courant (12) et étant fixé à la tête de pompe (10), **caractérisé en ce que** le tuyau de protection (14) est fixé à la tête de pompe (10) en tant qu'auxiliaire d'abaissement de manière telle qu'il empêche les charges de s'exercer sur le câble d'alimentation en courant lors de l'abaissement de la pompe immergée.

2. Dispositif de protection selon la revendication 1, **caractérisé en ce que** le câble d'alimentation en courant (12) est monté mobile longitudinalement dans le tuyau de protection (14).

3. Dispositif de protection selon la revendication 1 ou 2, **caractérisé en ce que** le tuyau de protection (14) est flexible à un point tel qu'il ne complique pas le déroulement du câble d'alimentation en courant (12).

4. Dispositif de protection selon l'une des revendications 1 à 3, **caractérisé en ce qu'**au moins dans l'extrémité du tuyau de protection (14) voisine de la tête de pompe (10) est montée une douille de coincement (16 ; 28) à travers laquelle est guidé en mouvement le câble d'alimentation en courant (12).

5. Dispositif de protection selon la revendication 4, **caractérisé en ce que** la douille de coincement (28) voisine de la tête de pompe (10) dépasse du tuyau de protection (14) et est reliée solidairement, par son extrémité dépassante, à la tête de pompe (10), un dispositif de contrainte (30) entourant le tuyau de protection (14) à l'extérieur étant prévu pour l'immobilisation par coincement du tuyau de protection (14) sur la douille de coincement (28).

6. Dispositif de protection selon la revendication 5, **caractérisé en ce que** le dispositif de contrainte est un collier de serrage.

7. Dispositif de protection selon la revendication 4, **caractérisé en ce qu'**un premier élément de coincement (20) est relié rigidement à la tête de pompe (10) et un deuxième élément de coincement (22) peut être fixé au premier élément de coincement dans la région de la douille de coincement (16) par introduction du tuyau de protection (14).

8. Dispositif de protection selon l'une des revendications 1 à 7, **caractérisé en ce qu'**à l'extrémité du tuyau de protection (14) éloignée de la tête de pompe (10) et à l'intérieur de celui-ci est prévue une douille de coincement (18) à travers laquelle le câble d'alimentation en courant (12) est guidé en mouvement et **en ce que** un dispositif de contrainte (24) entourant le tuyau de protection (14) à l'extérieur est prévu pour l'immobilisation par coincement du tuyau de protection sur la douille de coincement (18), un câble de traction pouvant être fixé au dispositif de contrainte (24).

9. Dispositif de protection selon la revendication 8, **caractérisé en ce que** le dispositif de contrainte (24) présente une boucle (26) pour la fixation du câble de traction.

10. Dispositif de protection selon l'une des revendications 1 à 9, **caractérisé en ce que** sur le tuyau de protection (14) sont prévus des marquages longitudinaux.
